# EUROPEAN PATENT APPLICATION

(11) **EP 3 547 470 A1**
(43) Date of publication of application: **02.10.2019**
(21) Application number: 17874962.8
(22) Date of filing: 27.11.2017
(51) Int. Cl.: H01S 3/10, H01S 3/067, H01S 3/091

(54) **OPTICAL AMPLIFICATION DEVICE, EXCITATION LIGHT SUPPLY METHOD, AND CIRCUIT**

(30) Priority: 28.11.2016 JP 2016229938
(71) Applicant: NEC Corporation, Tokyo 108-8001 (JP)
(72) Inventor: INADA, Yoshihisa, Tokyo 108-8001 (JP)
(74) Representative: Betten & Resch
(86) International application number: PCT/JP2017/042356
(87) International publication number: WO 2018/097281

(57) **Abstract**

An optical amplification device is provided for supplying pump light with different distribution ratio to a plurality of optical fiber amplifiers with high reliability. The optical amplification device includes: a plurality of optical fiber amplifiers (102, 112); and an asymmetric coupling optical system (100) configure to input a plurality of pump light beams (P1, P2) and output a plurality of branched pump light beams (P12_C, P12_D) which are supplied respectively to the plurality of optical fiber amplifiers, the asymmetric coupling optical system including at least one asymmetric coupler (100) of 2-input, 2-output type having a predetermined asymmetric branching ratio, wherein a desired intensity difference between the plurality of branched pump light beams is set by adjusting an intensity of at least one input light beam of the asymmetric coupler.

## Description

### [Technical Field]

The present invention relates to an optical amplification device used in an optical transmission system, and more particularly to techniques of supplying pump light for optical amplification.

In a WDM (Wavelength Division Multiplexing) system adopted in large-capacity communication networks, the L band (1565 to 1625 nm) in addition to the C band (1530 to 1565 nm) with a good pump light rate is used to promote capacity enlargement and the broadening of band. As such a broadband optical amplifier, in general, an optical amplification medium to which a rare earth element such as Erbium is doped is used (which is hereinafter referred to as "optical fiber amplifier"). There has been proposed a parallel circuit, as a structure of an optical amplifier, in which a WDM input signal is demultiplexed into a plurality of sub-bands, respective optical signals on these sub-bands are amplified by separate optical fiber amplifiers, and then the amplified optical signals are combined (See Patent Literatures 1 and 2).

The above-mentioned optical fiber amplifier amplifies the optical signal by the pump light. It is known that its gain characteristic varies depending on the wavelength of the optical signal and the power of the pump light. For example, the optical fiber amplifier for the L band has a lower pump light rate than that for the C band. Accordingly, pump light of higher power is required to obtain the same level of gain. There has been proposed a method of controlling the power of the pump light for each wavelength band so that the gain characteristic is made uniform regardless of the wavelength band. For example, in the optical amplifier disclosed in Patent Literature 2, a distribution coupler is provided to a pump light source to supply pump light having an appropriate intensity to the optical fiber amplifier for each wavelength band.

In order to make the optical fiber amplifier operate, it is necessary to continuously supply it with the pump light of a power higher than a certain level. Particularly, in a communication device which is difficult to directly access, such as a submarine repeater, it is extremely important to use a highly reliable optical amplifier because repairs such as part replacement cannot be made. Therefore, a redundant structure adopting multiple pump light sources is used for enhancing reliability. For example, in the redundant structure disclosed in Patent Literature 3, three pump light sources and a 3x2 coupler are provided so that pump light can be supplied even if one of the pump light sources fails. Specifically, through the 3x2 coupler, first pump light and second pump light are used respectively for uplink and downlink, and third pump light is split into two and used for both uplink and downlink.

Patent Literature 4 discloses a pump-light supply control method for individually controlling power of pump light of multiple wavelengths by using a variable distribution element that can change its distribution ratio. More specifically, an optical amplifier may be composed of a combination of a Raman amplifier (e.g. DCF: Dispersion Compensating Fiber to which Raman amplification is applied) and an optical fiber amplifier (for example, EDFA: Erbium-Doped Fiber Amplifier). In such an optical amplifier, input signal light is amplified in Raman by the DCF before being amplified by the EDFA and then the amplified light is output as the output signal light. In such an operation, the variable distribution element controls the distribution ratio between the pump light power to be supplied to the DCF and the pump light power to be supplied to the EDFA to make the output light level for each wavelength almost flat.

### [Citation List]

### [Patent Literatures]

[Patent Literature 1] United States Patent No. 6049417
[Patent Literature 2] Japanese Patent Publication No. 2006-012979
[Patent Literature 3] Japanese Patent Publication No. H08-304860
[Patent Literature 4] WO2006/085370

### [Summary of Invention]

### [Problem to be solved by Invention]

In the case where the optical amplifier of the above-described parallel structure is applied to an optical communication apparatus requiring high reliability, it is required to supply respective optical fiber amplifiers of multiple wavelength bands with reliable pump light, taking the wavelength dependency into account. Moreover, in the case where uplink and downlink repeaters are provided respectively with optical amplifiers, it is necessary to equally provide reliable pump light in consideration of wavelength dependency to both the uplink and downlink optical amplifiers.

However, the above-mentioned Patent Literature 3 merely discloses the redundant structure in which the third pump light is distributed almost equally to the uplink and downlink optical amplifiers through the 3x2 coupler. That is, Patent Literature 3 does not disclose an optical circuit configuration that stably supplies pump light in consideration of wavelength dependency to a parallel-configured optical amplifier.

The pump light supply control method disclosed in the above-mentioned Patent Literature 4 uses the Raman amplifier to flatten output characteristics of each wavelength of the wavelength multiplexed signal light, which requires the circuit using the Raman amplifier and its control, resulting in complicated overall configuration and difficulty of improving the reliability in the optical amplifier of the repeater.

Therefore, an object of the present invention is to provide a method and circuit for supplying pump light with different distribution ratio to a plurality of optical fiber amplifiers with high reliability, and a light amplification device using the same.

### [Means for solving the problem]

An optical amplification device according to the present invention includes: a plurality of optical fiber amplifiers; and an optical system configure to input a plurality of pump light beams and output a plurality of branched pump light beams which are supplied respectively to the plurality of optical fiber amplifiers, the optical system including at least one asymmetric coupler having a predetermined asymmetric branching ratio, wherein a desired intensity difference between the plurality of branched pump light beams is set by adjusting an intensity of at least one input light beam of the asymmetric coupler.

An pump-light supply circuit according to the present invention is a pump-light supply circuit optically connected to a plurality of optical fiber amplifiers, including: an optical system configure to input a plurality of pump light beams and output a plurality of branched pump light beams which are supplied respectively to the plurality of optical fiber amplifiers, the optical system including at least one asymmetric coupler having a predetermined asymmetric branching ratio, wherein a desired intensity difference between the plurality of branched pump light beams is set by adjusting an intensity of at least one input light beam of the asymmetric coupler.

A method of supplying pump light according to the present invention is a method for supplying pump light to a plurality of optical fiber amplifiers, including: by an optical system, inputting a plurality of pump light beams; by at least one asymmetric coupler of a predetermined asymmetric branching ratio included in the optical system, outputting a plurality of output light beams having an intensity difference which depends on an intensity of at least one input light beam of the asymmetric coupler; and by the optical system, generating a plurality of branched pump light beams based on the plurality of output light beams to supply the plurality of branched pump light beams to the plurality of optical fiber amplifiers.

### [Advantages of Invention]

According to the present invention, pump light with different distribution ratios can be supplied to a plurality of optical fiber amplifiers with high reliability.

### [Brief Description of Drawings]

FIG. 1 is a configuration diagram showing an example of a pump light supply system in an optical amplification device according to a first exemplary embodiment of the present invention.
FIG. 2A is a block diagram showing an example of an asymmetric coupler used in the first exemplary embodiment.
FIG. 2B is a diagram showing an example of the branching ratio of the asymmetric coupler.
FIG. 3A is a graph showing the output characteristics of the asymmetric coupler when the input power of the input port B is Pin_B = 200 mW.
FIG. 3B is a graph showing the output characteristics of the asymmetric coupler when the input power of the input port B is Pin_B = 300 mW.
FIG. 4 is a configuration diagram showing another example of the pump light supply system in the optical amplification device according to the first exemplary embodiment.
FIG. 5 is a configuration diagram showing an example of a pump light supply system in the optical communication device according to the second exemplary embodiment of the present invention.

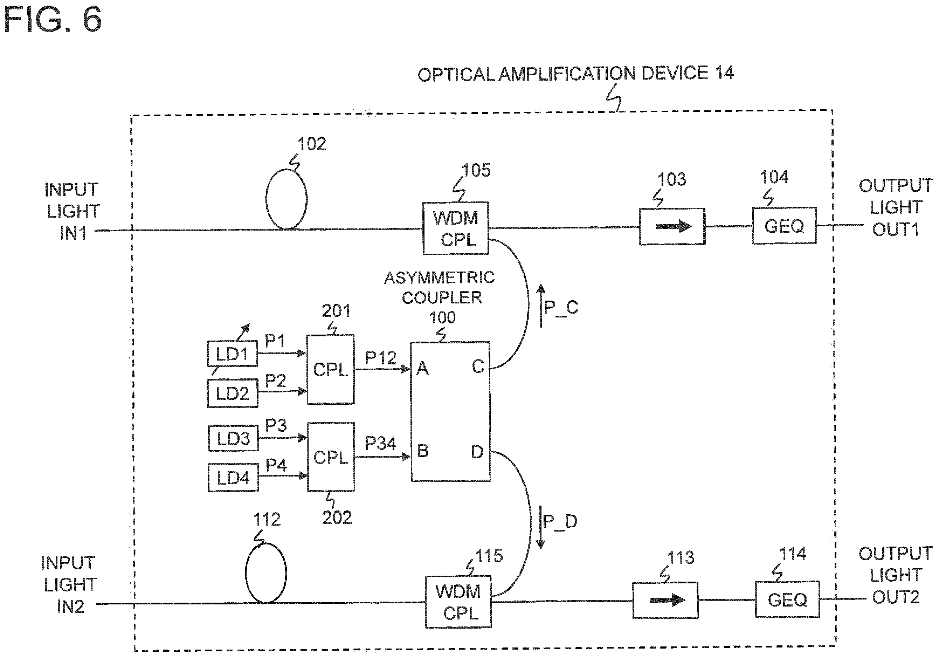

FIG. 6 is a configuration diagram showing another example of the pump light supply system in the optical communication device according to the second exemplary embodiment.
FIG. 7 is a configuration diagram showing an example of an pump light supply system in an optical communication device according to a third exemplary embodiment of the present invention.
FIG. 8 is a configuration diagram showing another example of the pump light supply system in the optical communication device according to the third exemplary embodiment.

### [Exemplary embodiments of Invention]

### <Outline of Exemplary embodiments>

According to the embodiment of the present invention, at least one coupler having an asymmetric branching ratio is provided in an optical system for supplying pump light. By changing the power of at least one of pump light inputs of the optical system including such an asymmetric coupler, power difference between two or more pump light outputs is changed. Thereby, it is possible to easily generate pump light outputs of different powers, which are supplied as pump light respectively to a plurality of optical fiber amplifiers having different amplification characteristics, allowing individually adjustment of plural output powers of the optical amplification device. The power of the pump light inputs of the asymmetric coupler is simply adjusted. Accordingly, it can avoid complicated configuration and pump light outputs with different distribution ratio can be reliably supplied to the plurality of optical fiber amplifiers.

Hereinafter, in order to avoid complicated descriptions, an optical repeater provided with an optical amplification device which amplifies optical signals of two wavelength bands in parallel is taken as an example. Specifically, a pump light distribution system will be described, which supplies pump light to optical fiber amplifiers for these wavelength bands, respectively. However, the present invention is not limited to this example but applicable to an optical amplification device in an optical communication system using three or more wavelength bands. As an optical fiber amplifier that performs optical amplification by pump light, an optical amplification medium to which a rare earth element is doped, for example, an erbium-doped fiber (EDF) amplifier, can be used.

### 1. First exemplary embodiment

### 1.1) Configuration

An optical amplification device according to the first embodiment of the present invention includes two optical fiber amplifiers having different amplification characteristics and a pump-light supply circuit which supplies these optical fiber amplifiers with pump light having different powers, respectively. The pump-light supply circuit is provided with: two pump light sources that emit pump light beams, respectively; and an optical system that generates pump light beams to be supplied to the two optical fiber amplifiers, respectively. The optical system for supplying pump light includes an asymmetric coupler as will be described later. By adjusting the power of the input pump light of the asymmetric coupler, the pump light powers supplied to the optical fiber amplifiers can be set to respective predetermined levels.

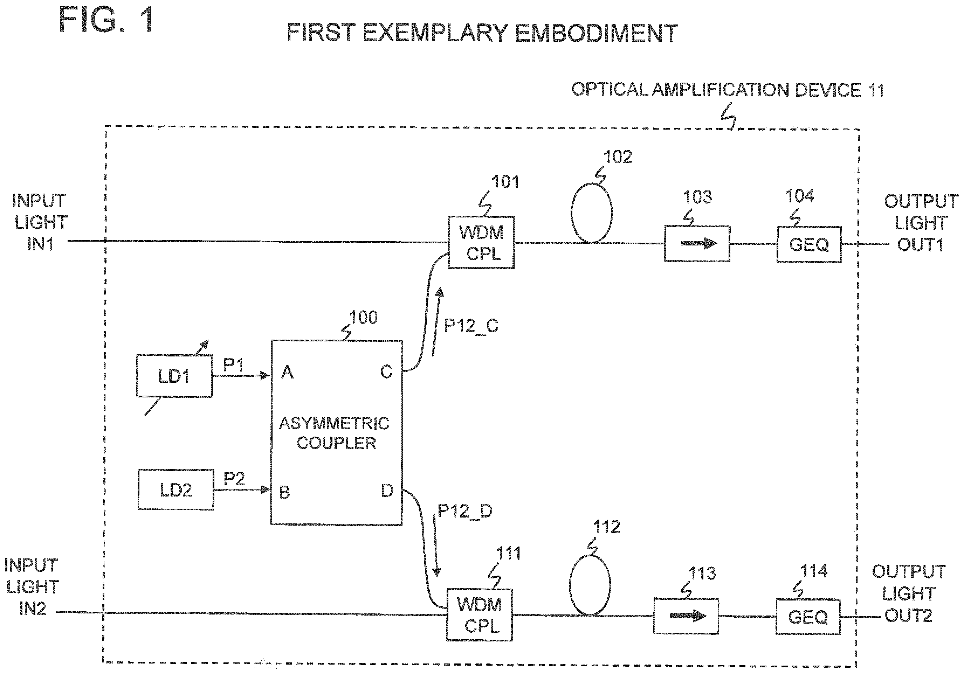

As illustrated in FIG. 1, an asymmetric coupler 100 is a two-input two-output optical coupler having an asymmetric branching ratio, in which the input ports A and B are optically connected respectively to the pump light sources LD1 and LD2, the output ports C and D are optically connected respectively to the WDM couplers 101 and 111 of two optical amplification systems. The pump light sources LD1 and LD2 are laser diodes that emit laser light of a predetermined wavelength, and at least one of the pump light sources is capable of changing its output power. In the present embodiment, it is assumed that the pump light source LD1 can adjust its output power.

The asymmetric coupler 100 inputs pump light beams P1 and P2 at the input ports A and B from the pump light sources LD1 and LD2, respectively, and performs combining and branching according to a predetermined asymmetric branching ratio. Thus, the branched pump light beams P12_C and P12_D output from the output ports C and D are supplied, as pump light, to the optical fiber amplifiers 102 and 112 through the WDM couplers 101 and 111, respectively.

One optical amplifying system of the optical amplification device has a configuration in which a WDM coupler 101, an optical fiber amplifier 102, an optical isolator 103, a gain equalizer 104, and the like are optically connected in series. The WDM coupler 101 multiplexes an input light beam IN1 of the repeater and the branched pump light beam P12_C input from the asymmetric coupler 100 to output the multiplexed light to the optical fiber amplifier 102. The optical fiber amplifier 102 amplifies the input light beam IN1 by radiation of the branched pump light beam P12_C. The optical fiber amplifier 102 outputs the output light OUT1 of the optical amplification device 11 through the optical isolator 103 and the gain equalizer 104. The gain equalizer 104 is provided to suppress the wavelength dependency of the optical fiber amplifier 102.

Similarly, the other optical amplification system also has a configuration in which the WDM coupler 111, the optical fiber amplifier 112, the optical isolator 113, the gain equalizer 114, and the like are optically connected in series. The input light beam IN2 is amplified by the optical fiber amplifier 112 irradiated with the branched pump light beam P12_D and the amplified light is output through the optical isolator 113 and the gain equalizer 114 as output light OUT 2 of the optical amplification device 11.

In the case where the gain characteristics of the optical fiber amplifiers 102 and 112 are dependent on wavelength and the wavelength bands of the input light beams IN1 and IN2 are different, the output powers of the optical fiber amplifiers 102 and 112 are non-uniform under condition of the same pump light. In the present exemplary embodiment, the asymmetric coupler 100 of combining/branching ratio being out of 50% is used. The asymmetric coupler 100 like this allows the output powers of the branched pump light beams P12_C and P12_D to be changed individually by only adjusting the output of the pump light source LD1 or LD2, resulting in that the output powers of the optical fiber amplifiers 102 and 112 can be made substantially uniform.

### 1.2) Asymmetric coupler and its output control

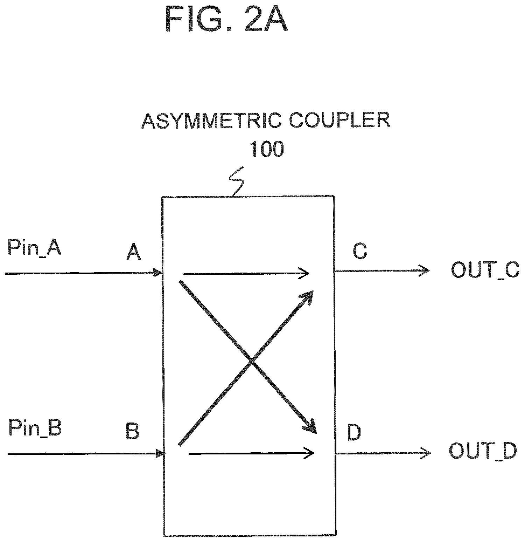

As shown in FIG. 2A, it is assumed that the asymmetric coupler 100 is a 2x2 coupler having an asymmetrical branching ratio m : n (m, n is an arbitrary integer not smaller than 0 and m ≠ n), Pin_A and Pin_B being indicative of input light at the two input ports A and B, respectively, and OUT_C and OUT_D being indicative of output light at the two output ports C and D, respectively. The asymmetric branching ratio m : n of the asymmetric coupler 100 indicates an asymmetric distribution characteristic such that each input light is distributed to two output ports C and D at the branching ratio of m : n, but the output light has the same level (OUT_C = OUT_D) if the input light beams Pin_A and Pin_B are at the same level (Pin_A = Pin_B). Hereinafter, for simplicity, assuming that a is an arbitrary value within the range of 0< a <R (R is a predetermined natural number), and the branching ratio is represented by a : (R - a), where a = 0 or R may be permitted. For example, if R = 10, the input light at the port A is distributed to the ports C and D at the branching ratio a : (10 - a), and the input light at the port B is distributed to the ports C and D at the branching ratio (10-a) : a. In other words, the asymmetric coupler 100 has the distribution characteristic such that the branching ratio from one of the two input ports to the two output ports is expressed as the inverse of a branching ratio from the other one of the two input ports to the two output ports.

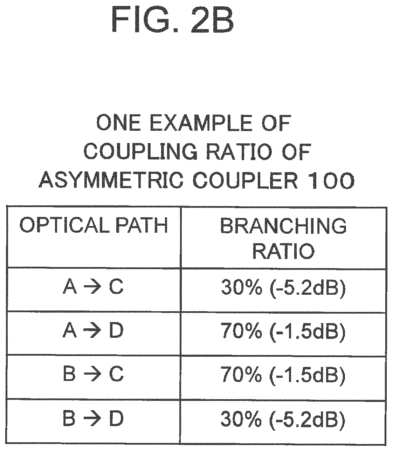

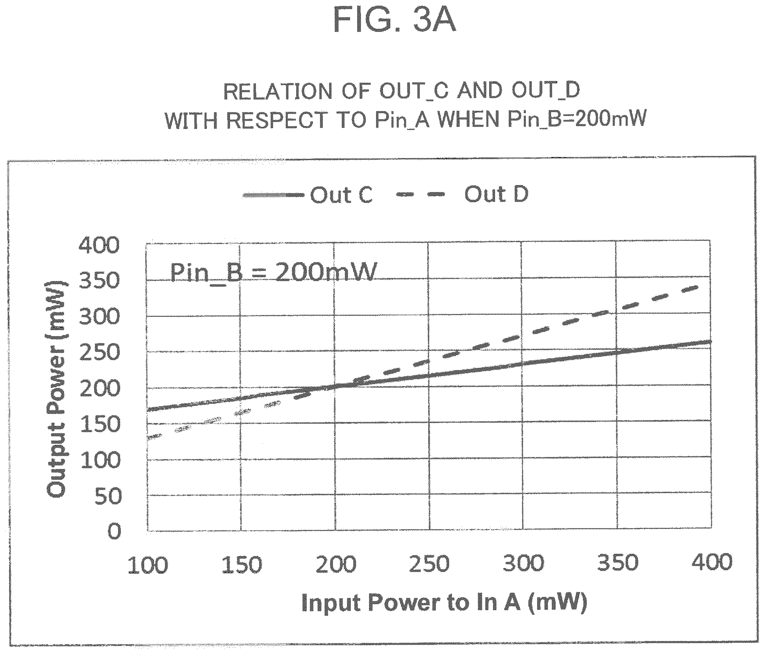

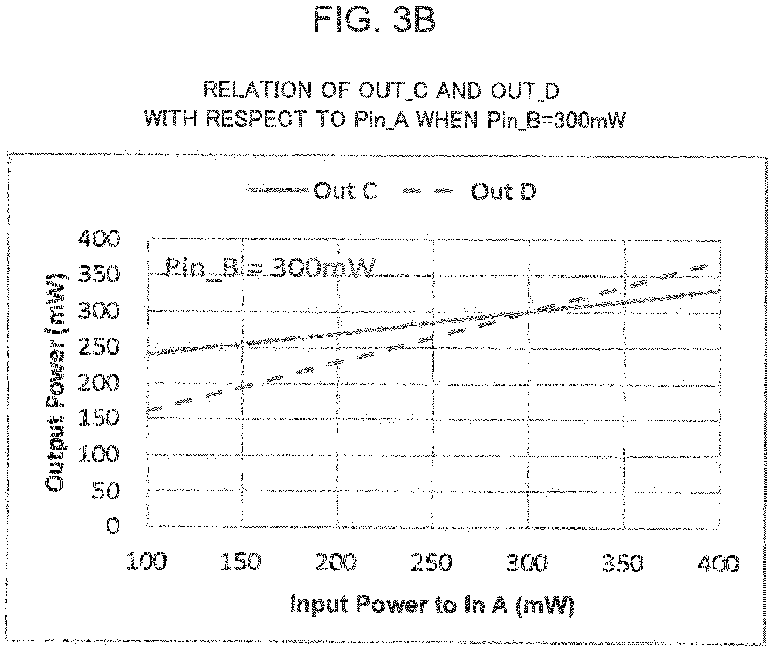

FIG. 2B shows an example of the branching ratio from each input port to each output port and the loss between input and output ports when a = 3. Input light from the port A is distributed to the ports C and D at a branching ratio of 3 : 7, and input light from the port B is distributed to the ports C and D at a branching ratio of 7 : 3. Note that a = 5 represents the equal branching ratio of 5:5, and a = any value other than 5 represents an unequal branching ratio. Next, with reference to FIG. 3, the coupling characteristic of the asymmetric coupler 100 having the asymmetric branching ratio as mentioned above will be described when coupling the pump light beams Pin_A and Pin_B from the pump light sources LD1 and LD2.

FIG. 3A shows an example of intensity changes of two outputs OUT_C, OUT_D with respect to a change in intensity of the light input Pin_A when the intensity of the light input Pin_B is fixed to 200 mW. As can be seen from this graph, when the intensity of Pin_A is larger than 200 mW, the intensity of the output OUT_D becomes larger with respect to the output OUT_C as the intensity of Pin_A increases. Conversely, when the intensity of Pin_A is smaller than 200 mW, the intensity of the output OUT_D becomes smaller with respect to the output OUT_C as the intensity of Pin_A decreases.

Similarly, as illustrated in FIG. 3B, when the intensity of the light input Pin_B is fixed to 300 mW, when the intensity of Pin_A is larger than 300 mW, the intensity of the output OUT_D becomes larger with respect to the output OUT_C as the intensity of Pin A increases. Conversely, when the intensity of Pin_A is smaller than 300 mW, the intensity of the output OUT_D becomes smaller with respect to the output OUT_C as the intensity of Pin_A decreases.

As can be seen from FIGS. 3A and 3B, one of the intensities of Pin_A and Pin_B is set to an arbitrary certain value and the other is changed, thereby it is possible to obtain two light outputs OUT_C and OUT_D having a desired intensity difference. Accordingly, the asymmetric coupler 100 can be used to obtain pump light outputs OUT_C and OUT_D with two different powers by adjusting the power of at least one of the pump light sources LD 1 and LD 2. These pump light outputs OUT_C and OUT_D are supplied respectively to the optical fiber amplifiers 102 and 112 as the branched pump light beams P12_C and P12_D as shown in FIG. 1.

### 1.3) Another example of configuration

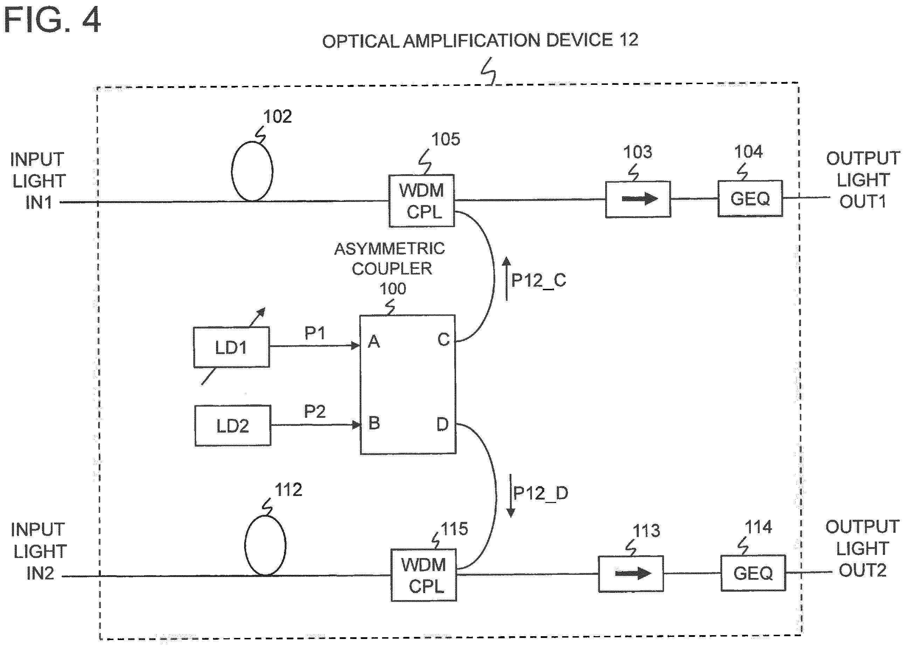

The optical amplification device 11 as shown in FIG. 1 is of the forward pumping type. The present exemplary embodiment can also be applied to the backward pumping system as shown in FIG. 4. It is to be noted that optical elements having the same functions as those in FIG. 1 are denoted by the same reference numerals, and a description thereof will be omitted.

As shown in FIG. 4, the optical amplification device 12 is provided with a pump-light supply circuit including the above-described pump light sources LD1 and LD2 and the asymmetric coupler 100. The configuration of the pump-light supply circuit is the same as that in FIG. 1. One optical amplifying system of the optical amplification device 12 has a configuration in which an optical fiber amplifier 102, a WDM coupler 105, an optical isolator 103, a gain equalizer 104, and the like are optically connected in series. The WDM coupler 105 multiplexes the input light beam IN1 of the repeater and the branched pump light beam P12_C from the asymmetric coupler 100 and outputs to the optical fiber amplifier 102. The input light beam IN1 is amplified by the optical fiber amplifier 102 irradiated with the branched pump light beam P12_C and the amplified light is output through the optical isolator 103 and the gain equalizer 104 as the output light OUT1 of the optical amplification device 12. Similarly, the other optical amplifying system also has a configuration in which the optical fiber amplifier 112, the WDM coupler 115, the optical isolator 113, the gain equalizer 114, and the like are optically connected in series. The WDM coupler 115 multiplexes the input light beam IN2 of the repeater and the branched pump light beam P12_D from the asymmetric coupler 100 and outputs to the optical fiber amplifier 112. The input light beam IN2 is amplified by the optical fiber amplifier 112 irradiated with the branched pump light beam P12_D and the amplified input light is output through the optical isolator 113 and the gain equalizer 114 as the output light OUT 2 of the optical amplification device 12.

### 1.4) Effect

According to the present embodiment, as shown in FIGS. 3A and 3B, the output power of at least one of the pump light sources LD1 and LD2 is adjusted to obtain branched pump light beams P12_C and P12_D having an arbitrary intensity difference therebetween. This allows the amplification characteristics of the optical fiber amplifiers 102 and 112 to be adjusted, resulting in easy intensity adjustment or intensity uniformity of the output light beams OUT1 and OUT2 of the optical amplification device 12.

For example, even when the amplification characteristics of two or more optical fiber amplifiers are different or when the difference in pump light intensity for obtaining predetermined amplification characteristics is large, the asymmetric coupler 100 having asymmetric branching characteristics as exemplified in FIGS. 3A and 3B can easily achieve desired optical amplification characteristics only by adjusting the power of the pump light source.

### 2. Second exemplary embodiment

An optical amplification device 13 according to a second exemplary embodiment of the present invention is different from the above-described optical amplification devices 11 and 12 in configuration of the pump-light supply circuit. Hereinafter, optical elements having the same functions as those in FIG. 1 are denoted by the same reference numerals, and a description thereof will be omitted. The pump-light supply circuit will be described focusing on differences from the first exemplary embodiment.

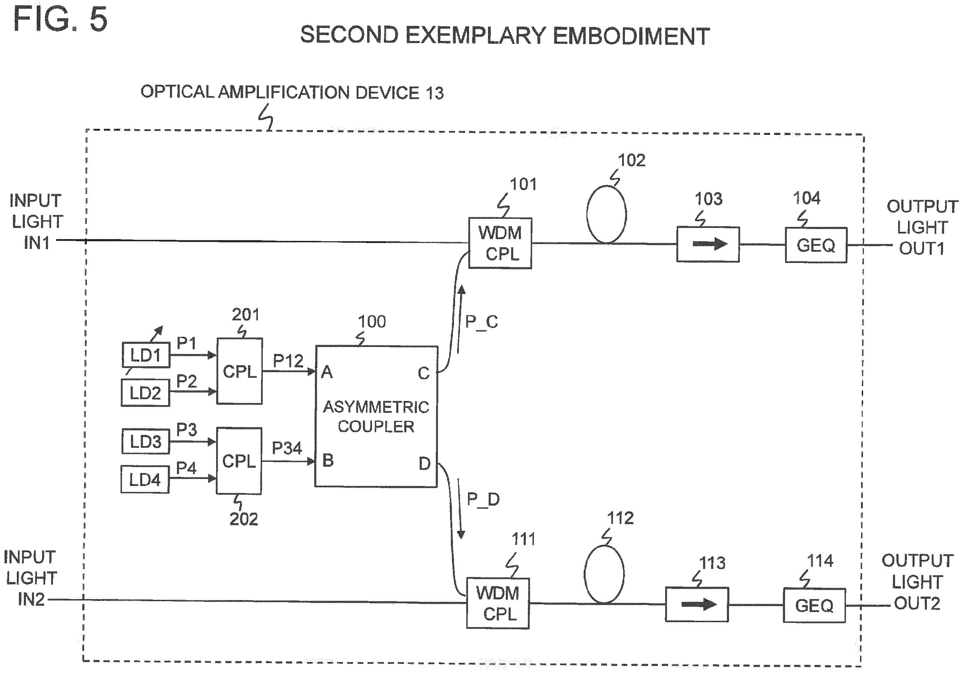

As shown in FIG. 5, the optical amplification device 13 according to the present exemplary embodiment has a configuration in which four pump light sources LD1 to LD4 are shared. The outputs of the pump light sources LD1 and LD2 are connected respectively to two input ports of the optical coupler 201, and the output port of the optical coupler 201 is connected to the input port A of the asymmetric coupler 100. Similarly, the outputs of the pump light sources LD3 and LD4 are connected respectively to two input ports of the optical coupler 202, and the output port of the optical coupler 202 is connected to the input port B of the asymmetric coupler 100. The optical couplers 201 and 202 are a 2-input 1-output optical coupler.

The asymmetric coupler 100, as described in the first exemplary embodiment, outputs the branched pump light beams P_C and P_D to the WDM couplers 101 and 111, respectively. These branched pump light beams P_C and P_D become pump light of the optical fiber amplifiers 102 and 112, respectively. Other elements are the same as those in FIG. 1 and therefore the description thereof is omitted.

The pump light sources LD1 to DL4 are laser diodes that emit laser light of a predetermined wavelength, and at least one pump light source can change its output power. In the present exemplary embodiment, it is assumed that the pump light source LD1 can adjust its output power. Both pump light sources LD1 and LD2 may be power-adjustable. In relation to the first exemplary embodiment, the asymmetric coupler 100 is employed and the intensity of the output P34 of the optical coupler 202 is fixed to a predetermined value, and the pump light source LD1 is adjusted so as to change the intensity of the output P12 of the optical coupler 201, resulting in the same effect as in the first exemplary embodiment.

The optical amplification device 13 shown in FIG. 5 is of the forward pumping type. The pump-light supply circuit according to the present exemplary embodiment can also be applied to the optical amplification device 14 of the backward pumping type as shown in FIG. 16. In the optical amplification device 14, the pump-light supply circuit has the similar circuit to that in FIG. 5 and circuit configuration other than the pump-light supply circuit has the similar configuration and function as those in FIG. 4. Accordingly, the same reference numerals are given to the similar elements and the description thereof is omitted.

### 3. Third exemplary embodiment

An optical amplification device 15 according to a third exemplary embodiment of the present invention has a configuration in which two optical amplifying systems are further added to the above-described optical amplification device 11. The pump-light supply circuit includes four pump light sources LD1 to LD4 and four symmetric/asymmetric couplers to generate four branched pump light outputs.

### 3.1) Configuration

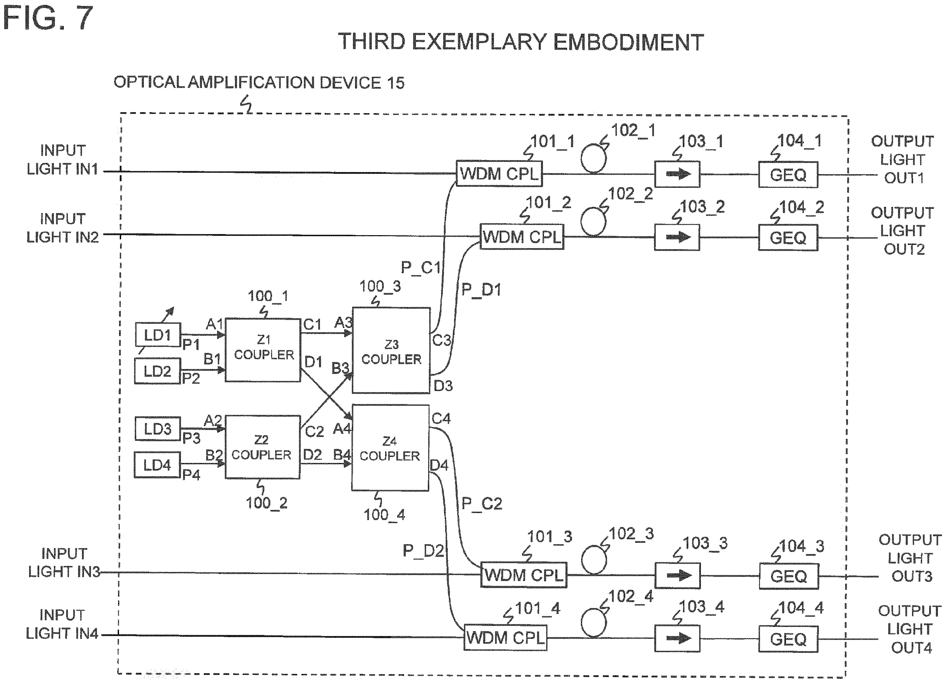

As shown in FIG. 7, the pump-light supply circuit according to the present exemplary embodiment is composed of four pump light sources LD1 to LD4 and four couplers 100_1 to 100_4, where each of Z couplers 100_1 to 100_4 has a branching ratio Z (Z1, Z2, Z4, Z4) which is set to equal-branching or asymmetrical-branching. The pump-light supply circuit configured in this manner can obtain a combination of branched pump light beams P_C1, P_C2, P_D1, P_D2 having desired intensities by adjusting the power of at least one pump light source. Since the four optical amplifying systems are basically the same as the optical amplifying system of FIG. 1, the same optical elements as those in FIG. 1 are denoted by the same reference numerals followed by serial numbers 1 to 4 as suffixes to distinguish them.

### 3.2) Pump-light supply circuit

In FIG. 7, the outputs of the pump light sources LD1 and LD2 are optically connected to two input ports A1 and B1 of the Z1 coupler 100_1, respectively. The output port C1 of the Z1 coupler 100_1 is optically connected to the input port A3 of the Z3 coupler 100_3. The output port D1 of the Z1 coupler 100_1 is optically connected to the input port A4 of the Z4 coupler 100_4. Similarly, the outputs of the pump light sources LD3 and LD4 are optically connected to two input ports A2 and B2 of the Z2 coupler 100_2, respectively. The output port C2 of the Z2 coupler 100_2 is optically connected to the input port B3 of the Z3 coupler 100_3. The output port D2 of the Z2 coupler 100_2 is optically connected to the input port B4 of the Z4 coupler 100_4. The output port C3 of the Z3 coupler 100_3 is optically connected to the WDM coupler 101_1 and the output port C4 of the Z4 coupler 100_4 is optically connected to the WDM coupler 101_3 to supply branched pump light beams P_C1 and P_C2 to the WDM couplers 101_1 and 101_3, respectively. The output port D3 of the Z3 coupler 100_3 is optically connected to the WDM coupler 101_ 2, and the output port D4 of the Z4 coupler 100_4 is optically connected to the WDM coupler 101_4 to supply the branched pump light beams P_D1 and P_D2 to the WDM couplers 101_2 and 101_4, respectively.

If Z = a ≠ 5, a combination of the Z couplers 100_1 to 100_4 has an asymmetric-branching characteristic similar to that of the asymmetric coupler 100 in the first exemplary embodiment (for example, in the case of a = 3, the characteristic as shown in FIGS. 2 and 3 Characteristics) and, if Z = a = 5, has an equal-branching ratio (50% branching). Therefore, by setting each of Z1, Z2, Z4, Z4 to 50% branching or asymmetric branching, it is possible to construct an asymmetric coupling optical system having the following combinations (1) to (6) of branching ratios.
(1) If Z1 = Z2 = 5 (50% branching) and Z3 and Z4 = a ≠ 5 (asymmetric branching), P_C1 = P_C2 and P_D1 = P_D2 in power.
(2) If Z1 and Z2 = a ≠ 5 (asymmetric branching) and Z3 = Z4 = 5 (50% branching), P_C1 = P_D1 and P_C2 = P_D2 in power, but P_C1 ≠ P_C2, P_D1 ≠ P_D2.
(3) If Z1 and Z2 ≠ 5 (asymmetric branching) and Z3 and Z4 ≠ 5 (asymmetric branching), P_C1 ≠ P_D1 and P_C2 ≠ P_D2 and P_C1 ≠ P_C2 and P_D1 ≠ P_D2 in power. The branching ratios of Z 1 to Z 4 may be the same or different.
(4) If Z1 or Z2 ≠ 5 (asymmetric branching), Z2 or Z1 = Z3 = Z4 = 5 (50% branching), P_C1 ≠ P_C2 and P_D1 ≠ P_D2 and P_C1 = P_D1 and P_C2 = P_D2.
(5) If Z3 ≠ 5 (asymmetric branching) and Z1 = Z2 = Z4 = 5 (50% branching), P_C1 ≠ P_D1 and P_C2 = P_D2 in power.
(6) If Z4 ≠ 5 (asymmetric branching) and Z1 = Z2 = Z3 = 5 (50% branching), P_C1 = P_D1 and P_C2 ≠ P_D2 in power.

If Z1 = Z2 = Z3 = Z4 = 5 (50% branching), all output powers are the same, that is, P_C1 = P_D1 = P_C2 = P_D2.

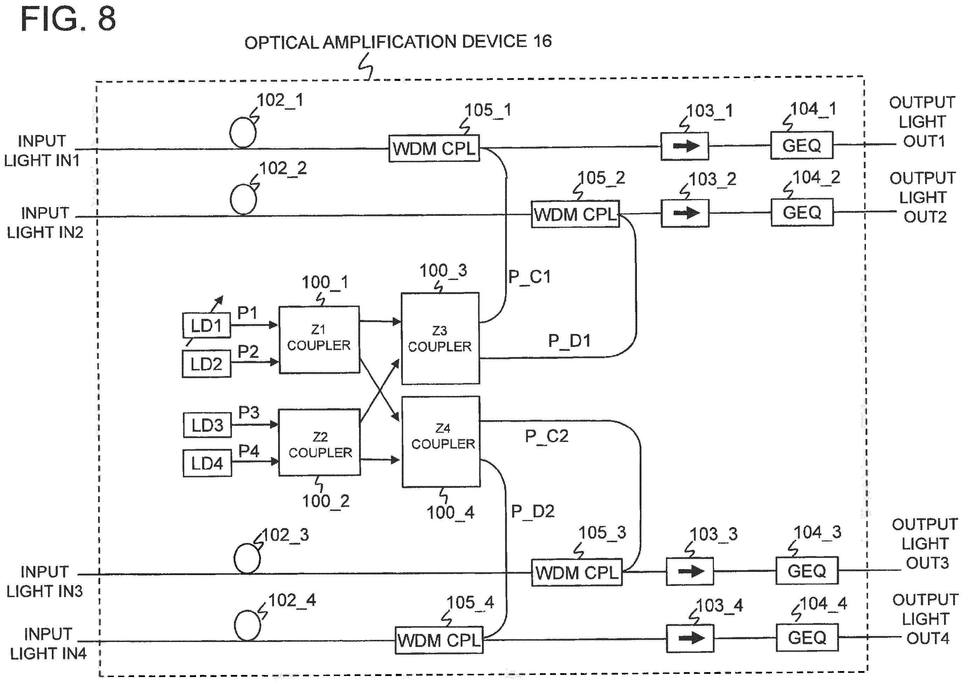

The optical amplification device 15 shown in FIG. 7 is of the forward pumping type. The pump-light supply circuit according to the present exemplary embodiment can also be applied to the optical amplification device 16 of the backward pumping type as shown in FIG. 8. In the optical amplification device 16, the pump-light supply circuit is similar to that as shown in FIG. 7, and each optical amplification system other than the pump-light supply circuit has the same configuration and function as those in FIG. 4, so the same optical elements are distinguished by adding serial numbers 1 to 4 of the system as suffixes.

### 3.3) Effect

As described above, four Z couplers capable of realizing asymmetric branching characteristics as exemplified in FIGS. 3A and 3B are combined and the output power of at least one pump light source is adjusted, thereby obtaining four branched pump light beams P_C1, P_C2, P_D1, P_D2 having arbitrary intensity differences. This makes it possible to adjust the amplification characteristics of the optical fiber amplifiers 102_1 to 102_4, and it is easy to perform the intensity adjustment or uniformity of the output light beams OUT1 to OUT4 of the optical amplification device 15.

For example, in the case where the input light beams IN1 and IN2 in FIG. 7 are optical signals of different wavelength bands, e.g. C band and L band, it is possible to eliminate power differences between the uplink outputs OUT1 and OUT2 due to the wavelength dependency of gain characteristics of the amplifiers 103_1 and 103_2 by adjusting the powers of the branched pump light beams P_C1 and P_D1. It is the same with the case where the input light beams IN3 and IN4 are signals of different wavelength bands in the downlink wavelength multiplexed light signal.

### 4. Others

In the above-described first exemplary embodiment, two pump light sources are employed, and the second and third exemplary embodiments employ four pump light sources. However, the present invention is not limited to these numbers of pump light sources. The present invention can be similarly applied to a configuration employing a plurality of pump light sources.

In the first to third exemplary embodiments as described above, a desired power difference in branched pump light is generated by adjusting the output power of a pump light source. Instead of the output adjustment of the pump light source itself, it is also possible to adjust the intensity by providing an attenuator in the middle of the optical path of the pump light beam.

Each of the above exemplary embodiments illustrates the case where the gain characteristic of the optical fiber amplifier has wavelength dependence, that is, the pumping efficiency differs depending on the wavelength. The present invention is not limited to such cases. The present invention is also applicable to the case where the optical fiber amplifier has no wavelength dependency or the chase where a pump light beam of a different power is provided to each optical fiber amplifier.

### 5. Supplementary Notes

Some or all of the above-described embodiments may also be described as follows, but are not limited thereto.

### (Supplementary Note 1)

An optical amplification device characterized by comprising:
a plurality of optical fiber amplifiers; and
an asymmetric coupling optical system configure to input a plurality of pump light beams and output a plurality of branched pump light beams which are supplied respectively to the plurality of optical fiber amplifiers,
the asymmetric coupling optical system including at least one 2-input, 2-output asymmetric coupler having a predetermined asymmetric branching ratio,
wherein a desired intensity difference between the plurality of branched pump light beams is set by adjusting an intensity of at least one input light beam of the asymmetric coupler.

### (Supplementary note 2)

The optical amplification device according to supplementary note 1, characterized in that the asymmetric branching ratio of the asymmetric coupler is a:(R - a) for a first input of the asymmetric coupler and (R - a):a for a second input of the asymmetric coupler, where R is a predetermined natural number, a is a value larger than 0 and smaller than R.

### (Supplementary note 3)

The optical amplification device according to supplementary note 1 or 2, characterized in that the asymmetric coupling optical system includes a single asymmetric coupler which inputs a first pump light beam and a second pump light beam to supply a first branched pump light beam and a second branched pump light beam respectively to a first optical fiber amplifier and a second optical fiber amplifier.

### (Supplementary note 4)

The optical amplification device according to supplementary note 1 or 2, characterized in that the asymmetric coupling optical system includes a first to fourth couplers of 2-input, 2-output type, at least one of the first to fourth couplers being the asymmetric coupler, wherein
the first coupler inputs a first pump light beam and a second pump light beam;
the second coupler inputs a third pump light beam and a fourth pump light beam;
the third coupler inputs a first output of the first coupler and a first output of the second coupler and supplies a first branched pump light beam and a second branched pump light beam respectively to a first optical fiber amplifier and a second optical fiber amplifier; and
the fourth coupler inputs a second output of the first coupler and a second output of the second coupler and supplies a third branched pump light beam and a fourth branched pump light beam respectively to a third optical fiber amplifier and a fourth optical fiber amplifier.

### (Supplementary note 5)

The optical amplification device according to any one of supplementary notes 1-4, characterized in that an intensity difference between the plurality of branched pump light beams is set so that each of the plurality of optical fiber amplifiers respectively has a desired amplification characteristic.

### (Supplementary note 6)

The optical amplification device according to any one of supplementary notes 1-5, characterized in that amplification characteristics of the plurality of optical fiber amplifiers have wavelength dependency,
wherein an intensity difference between the plurality of branched pump light beams is set such that an amplification characteristic for an optical signal in a first wavelength band of a wavelength multiplexed signal and an amplification characteristic for an optical signal in a second wavelength band of the wavelength multiplexed signal are made uniform.

### (Supplementary note 7)

An optical repeater characterized by comprising the optical amplification device according to any one of supplementary notes 1-6.

### (Supplementary note 8)

A pump-light supply circuit optically connected to a plurality of optical fiber amplifiers, characterized by comprising:
an optical system configure to input a plurality of pump light beams and output a plurality of branched pump light beams which are supplied respectively to the plurality of optical fiber amplifiers,
the asymmetric coupling optical system including at least one 2-input, 2-output asymmetric coupler having a predetermined asymmetric branching ratio,
wherein a desired intensity difference between the plurality of branched pump light beams is set by adjusting an intensity of at least one input light beam of the asymmetric coupler.

### (Supplementary note 9)

The pump-light supply circuit according to supplementary note 8, characterized in that the asymmetric branching ratio of the asymmetric coupler is a:(R - a) for a first input of the asymmetric coupler and (R - a):a for a second input of the asymmetric coupler, where R is a predetermined natural number, a is a value larger than 0 and smaller than R.

### (Supplementary note 10)

The pump-light supply circuit according to supplementary note 8 or 9, characterized in that the asymmetric coupling optical system includes a single asymmetric coupler which inputs a first pump light beam and a second pump light beam to supply a first branched pump light beam and a second branched pump light beam respectively to a first optical fiber amplifier and a second optical fiber amplifier.

### (Supplementary note 11)

The pump-light supply circuit according to supplementary note 8 or 9, characterized in that the asymmetric coupling optical system includes a first to fourth couplers of two-input, two-output type, at least one of the first to fourth couplers being the asymmetric coupler, wherein
the first coupler inputs a first pump light beam and a second pump light beam;
the second coupler inputs a third pump light beam and a fourth pump light beam;
the third coupler inputs a first output of the first coupler and a first output of the second coupler and supplies a first branched pump light beam and a second branched pump light beam respectively to a first optical fiber amplifier and a second optical fiber amplifier; and
the fourth coupler inputs a second output of the first coupler and a second output of the second coupler and supplies a third branched pump light beam and a fourth branched pump light beam respectively to a third optical fiber amplifier and a fourth optical fiber amplifier.

### (Supplementary note 12)

The pump-light supply circuit according to any one of supplementary notes 8-11, characterized in that an intensity difference between the plurality of branched pump light beams is set so that each of the plurality of optical fiber amplifiers respectively inputting the plurality of branched pump light beams has a desired amplification characteristic.

### (Supplementary note 13)

The pump-light supply circuit according to any one of supplementary notes 8-12, characterized in that amplification characteristics of the plurality of optical fiber amplifiers have wavelength dependency,
wherein an intensity difference between the plurality of branched pump light beams is set such that an amplification characteristic for an optical signal in a first wavelength band of a wavelength multiplexed signal and an amplification characteristic for an optical signal in a second wavelength band of the wavelength multiplexed signal are made uniform.

### (Supplementary note 14)

An optical repeater that operates by the pump-light supply circuit according to any one of Supplementary notes 8 to 13.

### (Supplementary note 15)

A method for supplying pump light to a plurality of optical fiber amplifiers, characterized by comprising:
by an asymmetric coupling optical system, inputting a plurality of pump light beams;
by at least one 2-input, 2-output asymmetric coupler included in the asymmetric coupling optical system, outputting a plurality of output light beams having an intensity difference which depends on an intensity of at least one input light beam of the asymmetric coupler; and
by the optical system, generating a plurality of branched pump light beams based on the plurality of output light beams to supply the plurality of branched pump light beams to the plurality of optical fiber amplifiers.

### (Supplementary note 16)

The method according to supplementary note 15, characterized in that the asymmetric branching ratio of the asymmetric coupler is a:(R - a) for a first input of the asymmetric coupler and (R - a):a for a second input of the asymmetric coupler, where R is a predetermined natural number, a is a value larger than 0 and smaller than R.

### (Supplementary note 17)

The method according to supplementary note 15 or 16, characterized in that by adjusting an intensity of at least one input light beam of the asymmetric coupler, an intensity difference between the plurality of branched pump light beams is set so that each of the plurality of optical fiber amplifiers respectively has a desired amplification characteristic.

### (Supplementary note 18)

The method according to any one of supplementary notes 15-17, wherein the asymmetric coupling optical system includes a single asymmetric coupler, the method characterized by comprising:
by an asymmetric coupling optical system, inputting first and second pump light beams;
setting an intensity difference between first and second branched pump-light beams which are two outputs of the asymmetric coupler by adjusting an intensity of at least one of the first and second pump light beams; and
supplying the first and second branched pump light beams respectively to first and second optical fiber amplifiers.

### (Supplementary note 19)

The method according to any one of supplementary notes 15-17, characterized in that the asymmetric coupling optical system includes a first to fourth couplers of two-input, two-output type, at least one of the first to fourth couplers being the asymmetric coupler, wherein
by the first coupler, inputting a first pump light beam and a second pump light beam;
by the second coupler, inputting a third pump light beam and a fourth pump light beam;
by the third coupler, inputting a first output of the first coupler and a first output of the second coupler and supplying a first branched pump light beam and a second branched pump light beam respectively to a first optical fiber amplifier and a second optical fiber amplifier; and
by the fourth coupler, inputting a second output of the first coupler and a second output of the second coupler and supplying a third branched pump light beam and a fourth branched pump light beam respectively to a third optical fiber amplifier and a fourth optical fiber amplifier.

The present invention is based on the priority claim of the Japanese Patent Application No. 2016-229938 filed on November 28, 2016, and all the contents of the application are cited in this document.

### [Industrial applicability]

The present invention is applicable to an optical communication device having a plurality of optical amplifiers, for example, a submarine repeater applied to a large capacity submarine communication system.

### [Explanation of signs]

11 to 16 Optical amplification device
100 Asymmetric coupler
100_1 to 100_4 Z1-Z4 coupler
101, 105,111, 115 WDM coupler
102, 112 Optical fiber amplifier
103, 113 Optical isolator
104, 114 Gain equalizer
LD1 ∼ LD4 Pump light source
P12_C, P12_D, P_C, P_D, P_C1, P_D1, P_C2, P_D2 Branched pump light beams

## Claims

1. An optical amplification device comprising:
a plurality of optical fiber amplifiers; and
an optical system configure to input a plurality of pump light beams and output a plurality of branched pump light beams which are supplied respectively to the plurality of optical fiber amplifiers,
the optical system including at least one asymmetric coupler having a predetermined asymmetric branching ratio,
wherein a desired intensity difference between the plurality of branched pump light beams is set by adjusting an intensity of at least one input light beam of the asymmetric coupler.

2. The optical amplification device according to claim 1, wherein the asymmetric branching ratio of the asymmetric coupler is a:(R - a) for a first input of the asymmetric coupler and (R - a):a for a second input of the asymmetric coupler, where R is a predetermined natural number, a is a value larger than 0 and smaller than R.

3. The optical amplification device according to claim 1 or 2, wherein the optical system includes a single asymmetric coupler which inputs a first pump light beam and a second pump light beam to supply a first branched pump light beam and a second branched pump light beam respectively to a first optical fiber amplifier and a second optical fiber amplifier.

4. The optical amplification device according to claim 1 or 2, wherein the optical system includes a first to fourth couplers of two-input, two-output type, at least one of the first to fourth couplers being the asymmetric coupler, wherein
the first coupler inputs a first pump light beam and a second pump light beam;
the second coupler inputs a third pump light beam and a fourth pump light beam;
the third coupler inputs a first output of the first coupler and a first output of the second coupler and supplies a first branched pump light beam and a second branched pump light beam respectively to a first optical fiber amplifier and a second optical fiber amplifier; and
the fourth coupler inputs a second output of the first coupler and a second output of the second coupler and supplies a third branched pump light beam and a fourth branched pump light beam respectively to a third optical fiber amplifier and a fourth optical fiber amplifier.

5. The optical amplification device according to any one of claims 1-4, wherein an intensity difference between the plurality of branched pump light beams is set so that each of the plurality of optical fiber amplifiers respectively inputting the plurality of branched pump light beams has a desired amplification characteristic.

6. The optical amplification device according to any one of claims 1-5, wherein amplification characteristics of the plurality of optical fiber amplifiers have wavelength dependency,
wherein an intensity difference between the plurality of branched pump light beams is set such that an amplification characteristic for an optical signal in a first wavelength band of a wavelength multiplexed signal and an amplification characteristic for an optical signal in a second wavelength band of the wavelength multiplexed signal are made uniform.

7. An optical repeater comprising the optical amplification device according to any one of claims 1-6.

8. A pump-light supply circuit optically connected to a plurality of optical fiber amplifiers, comprising:
an optical system configure to input a plurality of pump light beams and output a plurality of branched pump light beams which are supplied respectively to the plurality of optical fiber amplifiers,
the optical system including at least one asymmetric coupler having a predetermined asymmetric branching ratio,
wherein a desired intensity difference between the plurality of branched pump light beams is set by adjusting an intensity of at least one input light beam of the asymmetric coupler.

9. The pump-light supply circuit according to claim 8, wherein the asymmetric branching ratio of the asymmetric coupler is a:(R - a) for a first input of the asymmetric coupler and (R - a):a for a second input of the asymmetric coupler, where R is a predetermined natural number, a is a value larger than 0 and smaller than R.

10. The pump-light supply circuit according to claim 8 or 9, wherein the optical system includes a single asymmetric coupler which inputs a first pump light beam and a second pump light beam to supply a first branched pump light beam and a second branched pump light beam respectively to a first optical fiber amplifier and a second optical fiber amplifier.

11. The pump-light supply circuit according to claim 8 or 9, wherein the optical system includes a first to fourth couplers of two-input, two-output type, at least one of the first to fourth couplers being the asymmetric coupler, wherein
the first coupler inputs a first pump light beam and a second pump light beam;
the second coupler inputs a third pump light beam and a fourth pump light beam;
the third coupler inputs a first output of the first coupler and a first output of the second coupler and supplies a first branched pump light beam and a second branched pump light beam respectively to a first optical fiber amplifier and a second optical fiber amplifier; and
the fourth coupler inputs a second output of the first coupler and a second output of the second coupler and supplies a third branched pump light beam and a fourth branched pump light beam respectively to a third optical fiber amplifier and a fourth optical fiber amplifier.

12. The pump-light supply circuit according to any one of claims 8-11, wherein an intensity difference between the plurality of branched pump light beams is set so that each of the plurality of optical fiber amplifiers respectively inputting the plurality of branched pump light beams has a desired amplification characteristic.

13. The pump-light supply circuit according to any one of claims 8-12, wherein amplification characteristics of the plurality of optical fiber amplifiers have wavelength dependency,
wherein an intensity difference between the plurality of branched pump light beams is set such that an amplification characteristic for an optical signal in a first wavelength band of a wavelength multiplexed signal and an amplification characteristic for an optical signal in a second wavelength band of the wavelength multiplexed signal are made uniform.

14. A method for supplying pump light to a plurality of optical fiber amplifiers, comprising:
by an optical system, inputting a plurality of pump light beams;
by at least one asymmetric coupler of a predetermined asymmetric branching ratio included in the optical system, outputting a plurality of output light beams having an intensity difference which depends on an intensity of at least one input light beam of the asymmetric coupler; and
by the optical system, generating a plurality of branched pump light beams based on the plurality of output light beams to supply the plurality of branched pump light beams to the plurality of optical fiber amplifiers.

15. A setting method for setting an optical amplification device including an optical system configure to input a plurality of pump light beams and output a plurality of branched pump light beams which are supplied respectively to the plurality of optical fiber amplifiers, the setting method comprising:
fixing an asymmetric branching ratio of at least one asymmetric coupler included in the optical system to a predetermined value; and
setting a desired intensity difference between the plurality of branched pump light beams by adjusting an intensity of at least one input light beam of the asymmetric coupler.
